# EUROPEAN PATENT APPLICATION

(11) **EP 0 521 812 A1**
(43) Date of publication of application: **07.01.1993**
(21) Application number: 92610048.8
(22) Date of filing: 23.06.1992
(51) Int. Cl.: A01D 43/10

(54) **Mower with throwing rotor**

(30) Priority: 26.06.1991 DK 1257/91
(71) Applicant: JF-FABRIKEN - J. FREUDENDAHL A/S, DK-6400 Sonderborg (DK)
(72) Inventor: Freudendahl, Jan, DK-6400 Sonderborg (DK); Freudendahl, Jorn, DK-6400 Sonderborg (DK); Rasmussen, Laurits, DK-6400 Sonderborg (DK)
(74) Representative: Raffnsöe, Knud Rosenstand

(57) **Abstract**

A mower of the type which when operating ejects the harvested crop on to the field in a backwards facing direction forming an acute angle with the track of the mower, and comprises cutting members (4), a throwing rotor (5) and a hood (8) covering the throwing rotor and projecting backwards beyond same. The throwing rotor (5) also serves as conditioning rotor and comprises a cylindrical core (6) and protruding rigid elastic fingers (7), and that the hood (8) in the ejecting direction of the throwing rotor extends upwards at an angle V to horizontal.

## Description

The present invention relates to a mower of the type which when operating ejects the harvested crop on to the field in a backwards facing direction forming an acute angle with the track of the mower, and comprises cutting members, a throwing rotor and a hood covering the throwing rotor and projecting backwards beyond same.

A mower of this type is known from EP-A-0 332 552, which describes a mower which can be turned into an oblique position as compared to its driving direction, thus ejecting the swath obliquely to the rear, whereby swath mowed during two different passages of the field can be windrowed so as subsequently to be collected in one work process. The known mowing machine comprises a conditioning rotor after the cutting members and a throwing rotor after the conditioning rotor. The separate throwing rotor is necessary in order to throw the horizontally ejected swath with sufficient strength to achieve the desired effect. The accurate windrowing on the field is controlled by two side plates which are pivotal on a vertical axis for guiding the ejected swath in a sideways direction.

The object of the invention is to provide a mower of the type described hereinbefore which is of a more simple construction than the known one.

This is obtained by means of a mower, which is characterized in that the throwing rotor also serves as conditioning rotor and comprises a cylindrical core and protruding rigid elastic fingers, and that the hood in the ejecting direction of the throwing rotor extends upwards at an angle V to horizontal.

The angle V is preferably approximately 20°.

The invention is further explained in the following by means of an embodiment with reference to the drawing, in which
Fig 1 shows a lift-suspended mower with oblique ejection during two different passages of the field; and
Fig 2 is a schematical side view of the mower in Fig 1.

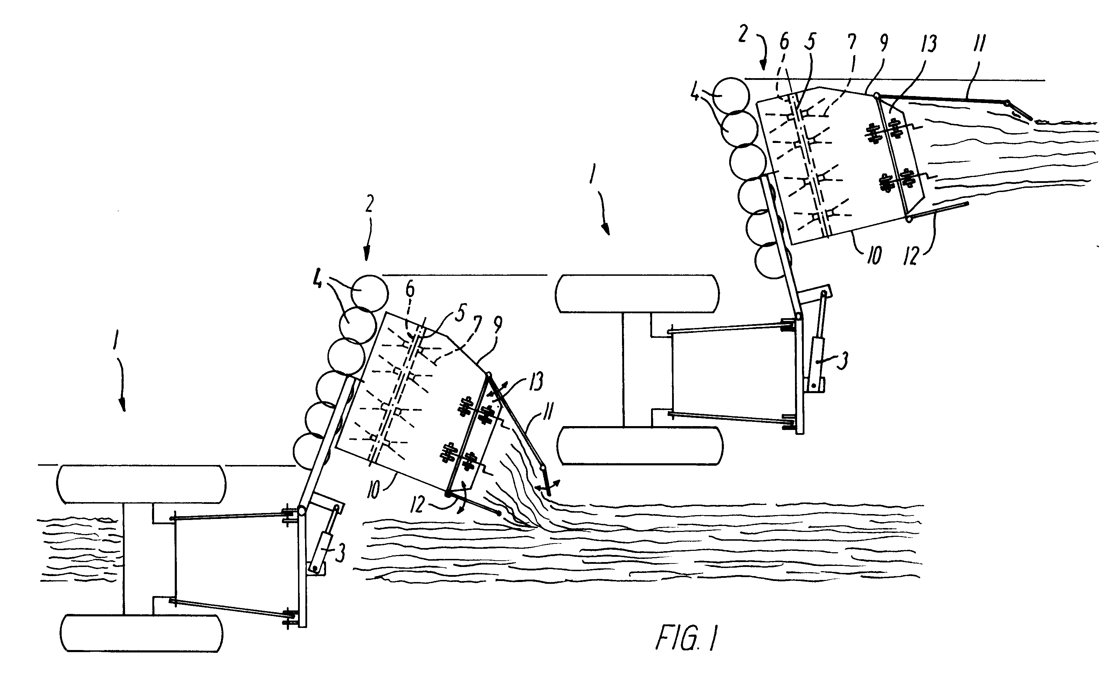

Fig 1 is a schematical view of a tractor which obliquely to the rear carries a lift-suspended mower 2, which by means of a hycraulic cylinder 3 can be turned so as to assume, e.g. the two in Fig 1 shown positions.

The mower 2 comprises a number of mowing members in the form of cutting discs 4 and a conditioning and throwing rotor 5. This comprises a cylindrical core 6, which carries protruding, rigid, elastic fingers 7 arranged in pairs in V. An example of such a rotor can be found in DK-B-159 090. The fingers may be elastic in themselves or they may be resiliently mounted on the cylindrical core 6. The fingers 7 have preferably a straight side and a bevelled side. It is thereby possible to adapt the conditioning and throwing rotor to the actual crop which is to be mowed by turning the fingers 7, so that either the straight og the bevelled side faces forwards in the direction of rotation.

A hood 8 is arranged above and behind the conditioning and throwing rotor 5 and extends upwards at an angle V to horizontal. The mower 2 is further provided with side plates 9 and 10 extending downwards from the hood 8. Each of the plates is provided with control flaps at its rear end. Thus the side plates 9, 10 are provided with control flaps 11, 12, respectively, which are designed to guide sideways the mowed swath ejected by the conditioning and throwing rotor. The hood 8 is provided with a control flap 13 for control of the throwing range for the ejected mowed swath.

When the mower is operating, it is driven through the field alternating between the two positions shown in Fig 1, i.e. alternately in front of and behind a position transverse to the driving direction. Thereby, the swath is ejected to one side of the track of the mower or the other by turns. The accurate placing of the windrows on the ground is partly controlled by means of the control flaps 11, 12, which control the flow of ejected swath in a sideways direction, partly by means of the control flap 13, which by guiding the flow of ejected swath in a more or less downwards direction controls the throwing range.

In the drawing is shown manual control of the control flap 13 in the form of threaded rods 14 with crank handle 15 but evidently, the control flap 13 may be operated by remote control by means of, e.g. a hydraulic cylinder.

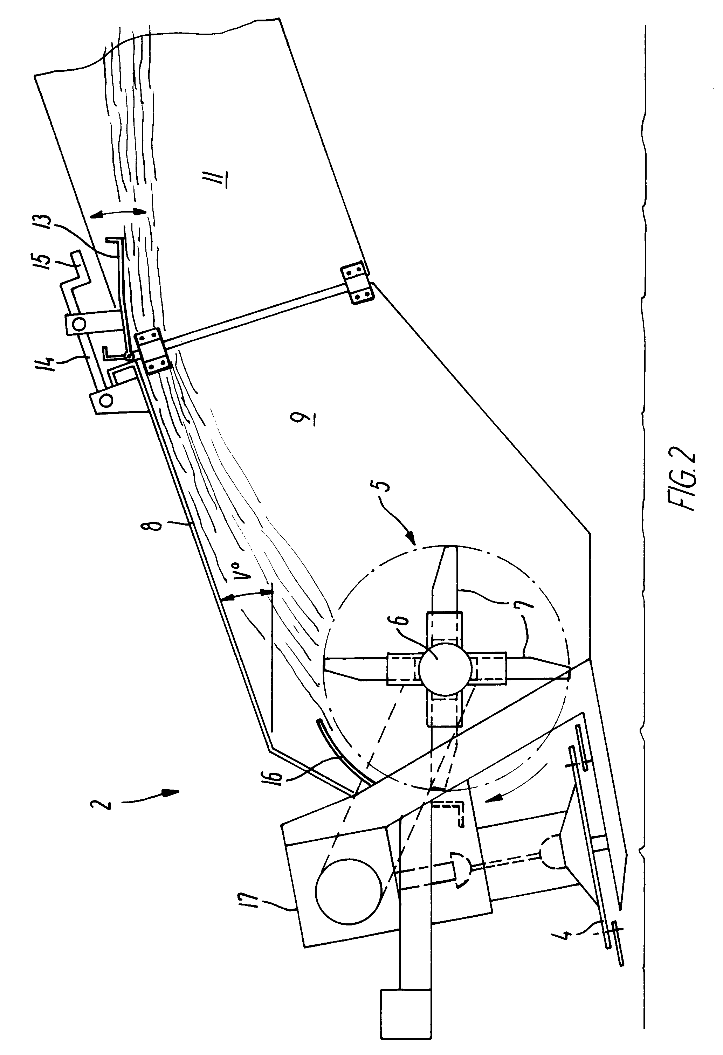

In order to derive full benefit from the adjustment possibility offered by the control flap 13, it is important that the flow of swath is at a certain level above the ground when it reaches the flap. This is obtained by the upwards slanting hood 8, which in the example shown in Fig 2 is further lifted above the conditioning and throwing rotor 5 and the guide plate 16, which surrounds it in part to ensure that the mowed swath is ejected from the conditioning and throwing rotor in the right place.

In addition to the already mentioned elements the mower 2 comprises a power transmission for transfer of the rotational energy partly to the knife discs 4, and partly to the conditioning and throwing rotor 5. The power transmission preferably comprises a variator 17 or is in a different way equipped so as to control the rate of rotation of the conditioning and throwing rotor 5. By controlling this rate and turning the fingers 7 as mentioned with either the straight or the bevelled edge facing forwards, the conditioning and throwing rotor can be adapted to the actual crop which is mowed in order to achieve optimum conditioning and optimum ejection.

It must be understood that albeit the invention is described in connection with a lift-suspended mower it can also be used for a towed mower with supporting wheels.

## Claims

1. A mower of the type which when operating ejects the harvested crop on to the field in a backwards facing direction forming an acute angle with the track of the mower, and comprises cutting members (4), a throwing rotor (5) and a hood (8) covering the throwing rotor and projecting backwards beyond same, **characterized** in that the throwing rotor (5) also serves as conditioning rotor and comprises a cylindrical core (6) and protruding rigid elastic fingers (7), and that the hood (8) in the ejecting direction of the throwing rotor extends upwards at an angle V to horizontal.

2. A mower as claimed in claim 1, **characterized** in that the angle V is approximately 20°.
